**Europäisches Patentamt**

**European Patent Office**

**Office européen des brevets**

(11) Veröffentlichungsnummer: **0 574 776 A1**

# EUROPÄISCHE PATENTANMELDUNG

(21) Anmeldenummer: **93109000.5**

(22) Anmeldetag: **04.06.93**

(51) Int. Cl.⁵: **C08G 63/676**, C09D 167/06

(30) Priorität: **17.06.92 DE 4219678**

(43) Veröffentlichungstag der Anmeldung:
**22.12.93 Patentblatt 93/51**

(84) Benannte Vertragsstaaten:
**AT DE ES GB IT NL**

(71) Anmelder: **Wolff Walsrode Aktiengesellschaft**
**Postfach 15 15**
**D-29655 Walsrode(DE)**

(72) Erfinder: **Kressdorf, Burkhard, Dr.**
**Ellinghäuser Strasse 15**
**W-3030 Walsrode(DE)**
Erfinder: **Lühmann, Erhard, Dipl.-Ing.**
**Kastanienweg 2**
**W-3036 Bomlitz 1(DE)**
Erfinder: **Dannhorn, Wolfgang, Dr.**
**Meisenweg 1**
**W-3032 Fallingbostel(DE)**
Erfinder: **Hoppe, Lutz, Dr.**
**Am Badeteich 8**
**W-3030 Walsrode(DE)**

(74) Vertreter: **Braun, Rolf, Dr. et al**
**Bayer AG**
**Konzernverwaltung RP**
**Patentabteilung**
**D-51368 Leverkusen (DE)**

(54) **Polymerisierbare, hochvernetzende Lackbindemittel und ihre Verwendung zur Herstellung von Lacken.**

(57) Die Erfindung betrifft neue allylgruppenhaltige, verzweigte Polyester, die wasseremulgierbar sind, und ihre Verwendung als Lackrohstoffe.

EP 0 574 776 A1

Die Erfindung betrifft neue allylgruppenhaltige, verzweigte Polyester, die wasseremulgierbar sind, und ihre Verwendung als Lackrohstoffe.

Lackformulierungen, die ohne organische Lösungsmittel verarbeitet werden können, finden aufgrund der stetig steigenden Anforderungen auf dem Umweltschutzsektor wachsendes Interesse, Zum Einstellen der gewünschten Verarbeitungsviskosität solcher Bindemittel ist es meist notwendig, entweder Reaktivverdünner oder Wasser zuzusetzen, Jedoch sind häufig die Reaktivverdünner, wie Styrol, Acrylate und Methacrylate, physiologisch sehr bedenklich, So können sie Hautreizungen und Augenbrennen hervorrufen, Außerdem beeinflußt der je nach Viskositätseinstellung schwankende Anteil an Reaktivverdünner die Lackeigenschaften z. T. erheblich. Diese Nachteile lassen sich bei Verwendung von Wasser als Verdünnungsmittel vermeiden (siehe Farbe + Lack, 98, 165 (1992)).

Wasseremulgierbare, polymerisierbare Polyester auf Basis von mono- und difunktionellen Hydroxylkomponenten sind bekannt aus DE-OS 3 441 154, DE-OS 2 905 666, DE-OS 2 804 216 und DE-OS 3 218 200. Die Polyester lassen sich mit Polymerisationsinitiatoren oder durch UV-Bestrahlung aushärten, allerdings sind die Aushärtezeiten für die technische Anwendung, z.B. Möbellackierung, zu lang. Außerdem dringen die Bindemittel tief in Holz ein und weisen nach der Härtung eine zu geringe Härte auf. Die geringe Reaktivität ungesättigter Polyester ist bekannt.

Produkte mit höheren Aushärtegeschwindigkeiten konnten mit modifizierten, ungesättigten Polyestern erhalten werden. In der DE-OS 3 935 495 wird beispielsweise ein linearer, ungesättigter Polyester mit Isocyanat umgesetzt. Durch die Reaktion entsteht ein höherviskoses Produkt mit kürzerer Aushärtezeit. Die Produkte müssen aber mit organischen Lösemitteln auf Verarbeitungsviskosität verdünnt werden; dies bedingt den Einsatz kostenaufwendiger Abluftnachverbrennungsanlagen.

Darüber hinaus sind die zur Synthese notwendigen Polyisocyanate toxikologisch sehr bedenklich. Isocyanate wirken bereits in sehr geringen Konzentrationen stark reizend auf die Haut, Schleimhäute, Augen und Atemwege. Ein weiterer Nachteil dieser Polyesterpolyurethane ist ihre aufwendige Herstellung über einen Zwei -Stufen-Prozeß. Isocyanatmodifizierte, wasseremulgierbare Polyester werden in der DE-OS 4 011 349 beschrieben. Auch in diesem Fall treten die Probleme mit den toxischen Isocyanaten und der aufwendigen Herstellung auf.

In der DE-OS 4 011 353 werden strahlenhärtbare, verzweigte Bindemittel beschrieben, die aus wäßrigen Lösungen verarbeitet werden. Daraus ergeben sich gegenüber wäßrigen Emulsionen folgende Nachteile:

1. Die Viskosität ist bei gleichem Bindemittelgehalt wesentlich höher.

2. nach der Auftragung erfolgt die Wasserabgabe langsam.

3. Das organische Bindemittel läßt sich aus Formulierungsresten schlechter ausflocken (Abwasserreinigung!).

4. Die Lacke sind wegen dem hohen Polyetheranteil sehr weich und

5. lassen sich deshalb nicht schleifen.

Solche Produkte eignen sich nicht für hochwertige Überzüge, die hohen mechanischen Anforderungen ausgesetzt sind.

Aufgabe der vorliegenden Arbeit war es, ein nicht hautreizendes, wasserdispergierbares, polymerisierbares Bindemittel herzustellen, das sowohl peroxidisch als auch UV-härtbar ist, vorher genannte Nachteile nicht aufweist und nach der Härtung gute Eigenschaften, insbesondere gute Härte, Haftfestigkeit, Lösemittelbeständigkeit und verringertes Eindringen in Holz aufweist.

Überraschenderweise ließ sich die Aufgabenstellung durch Synthese von verzweigten, ungesättigten Polyestern lösen. Charakteristisch für die erfindungsgemäßen, ungesättigten Polyester ist, daß die Verzweigungen durch Einbau von Polyolen, bevorzugt von nicht alkoxylierten Polyolen, erreicht werden.

Gegenstand der Erfindung sind ungesättigte Polyester auf Basis von mindestens einem Allyloxygruppierungen enthaltenden Alkohol und wenigstens einem Triol und/oder Polyolen mit mehr als 3 OH-Gruppen. Bevorzugt sind nicht alkoxylierte Polyole. Die erfindungsgemäßen Bindemittel werden durch Polykondensation der folgenden Komponenten erhalten:

A. eine oder mehrere Polycarbonsäuren und/oder, falls zugänglich, deren Anhydride, insbesondere, $\alpha,\beta$-ethylenischungesättigte Polycarbonsäuren,

B. ein mindestens eine Hydroxylgruppe enthaltenden Allylether,

C. ein oder mehrere zweiwertige Alkohole, davon mindestens ein Polyalkylenglykol, bevorzugt mit einer Molmasse von 400 bis 2000 g/Mol,

D. gegebenenfalls ein oder mehrere einwertige Alkohole, zum Einstellen der Molmasse,

E. ein oder mehrere wenigstens dreiwertige Polyole, bevorzugt solche, die nicht alkoxyliert sind.

Bei den Polycarbonsäuren A bzw. den Anhydriden der Polycarbonsäuren A handelt es sich um Dicarbonsäuren, wie z.B. Malonsäure, Bernsteinsäure, Glutarsäure, Adipinsäure, Phthalsäure, Terephthalsäure und Isophthalsäure, vorzugsweise um ungesättigte Dicarbonsäuren, besonders bevorzugt sind Anhydride von Dicarbonsäuren, Für die Herstellung der erfindungsgemäßen Polyester in Frage kommenden ungesättigten Dicarbonsäuren bzw. Dicarbonsäureanhydride sind Maleinsäure, Chlormaleinsäure, Fumarsäure, Citraconsäure, Itaconsäure, Mesaconsäure oder, falls zugänglich, deren Anhydride, vorzugsweise Maleinsäureanhydrid und Fumarsäureanhydrid, besonders bevorzugt Maleinsäureanhydrid. Der Einbau von z.B. Hexachlorendomethylentetrahydrophthalsäure, Tetrachlorphthalsäure oder Tetrabromphthalsäure ergibt schwer entflammbare Harze. Es können auch Hydroxycarbonsäuren, eingesetzt werden. Beispiele hierfür sind 2-Hydroxyessigsäure, 3-Hydroxypropansäure, 4-Hydroxybuttersäure, 5-Hydroxypentansäure, 6-Hydroxyhexansäure oder 10-Hydroxydecansäure.

Geeignete Komponenten B sind z.B. Allyl-, Methallyl-, Ethallyl-, Chlorallylether, wie oxethylierter oder oxpropoylierter Allyl-, Methallyl-, Ethallyl- oder Chlorallylalkohol, Glycerin-mono- oder -diallylether, Trimethylolethan-mono- oder -dimethallylether, Trimethylolpropan-mono- oder -diallylether, 1,3,5-Hexantriol-mono- oder -dichlorallylether, Pentaerythritmono-, di- oder -triallylether, Tetramethylolcyclohexanoltetraallylether, Buten-2,3-diol-1,4-monoallylether, gemischte Ether, wie Trimethylolpropan-monoallylmonocrotylether und Pentaerythrit-mono- oder -diallylmono-benzylether. Besonders bevorzugt sind Trimethylolpropan-mono- und -diallylether.

Als zweiwertige Alkohole C eignen sich Ethylenglykol, Propan-1,2-diol, Propan-1,3-diol, Diethylenglykol, Dipropylenglykol, Butan-1,3-diol, Butan-1,4-diol, Neopentylglykol, Hexan-1,6-diol, bis-oxalkyliertes Bisphenol A, Perhydrobisphenol A, Cyclohexan-1,4-dimethanol, 2,2-Dichlormethylpropan-1,3-diol, 2,2,4-Trimethylpentan-1,3-diol, Poly-(tetrahydrofuran)-diol, 1,4-Bis-(hydroxymethyl)-cyclohexan, Tricyclodecandimethanol, Diethanolamin, 2,2-Bis-hydroxymethyl)-pro-pionsäure sowie Polyalkylenglykole, wie Polyethylenglykole und Polypropylenglykole. Bevorzugt sind Polyethylenglykole.

Zum besseren Einstellen der Molmasse bzw. zur Modifikation der Eigenschaften, insbesondere der Dispergier- oder Löslichkeitseigenschaften, können einwertige Alkohole, wie Methanol, Ethanol, Butanol, Pentanol, Heptanol, Isooctanol, Allylalkohol, alkoxylierte Allylalkohole, Benzylalkohol, alle Hexanole, Octanole und Decanole, Cetylalkohole, Hexahydrobenzylalkohole, $\beta$-Phenylethanol und Polyalkylenglykolalhylether wie Diethylenglykolmonobutylether eingesetzt werden. Weiterhin eignen sich Hydroxysulfonsäuren, wie z.B. 2-Hydroxyethansulfonsäure, 3-Hydroxypropansulfonsäure, 4-Hydroxybutansulfonsäure, alle Phenolsulfonsäuren, ferner alle Naphtholsulfonsäuren.

Als Alkohole mit einem Siedepunkt > 190°C eignen sich z.B. Benzylalkohol (Sdp: 205°C), $\beta$-Phenylethanol (Sdp: 220°C), 1-Octanol (Sdp,: 196°C), 1-Decanol (Sdp.: 231°C) oder Diethylenglykolmonobutylether (Sdp.: 231°C).

Bevorzugte mehr als zweiwertige Polyole E sind drei- bis sechswertige, nicht oxalkylierte, aliphatische Alkohole.

Beispielsweise seien genannt: Glycerin, Trimethylolpropan, Trimethylolethan, Pentaerythrit, Erythritsorbit, Triethanolamin, Di-trimethylolpropan und Di-pentaerythrit, besonders bevorzugt sind Glycerin und Trimethylolpropan. Gegebenenfalls können auch oxalkylierte Alkohole verwendet werden. Unter den oxalkylierten Alkoholen werden oxethylierte und/oder oxpropylierte drei- bis sechswertige, aliphatische Alkohole verstanden. Die Grundkörper der Polyole sind drei- bis sechswertige, aliphatische Alkohole, z.B. Glycerin, Trimethylolpropan, Trimethylolethan, Pentaerythrit, Erythritsorbit, Di-trimethylolpropan und Dipentaerythrit.

In einer besonders bevorzugten Ausführungsform werden die Komponenten A bis E in folgenden Mol-Verhältnissen eingesetzt:

| Polycarbonsäure A: | 0,8 bis 1,2 Mol, |
|---|---|
| insbesondere | 0,9 bis 1,1 Mol, |
| Allylether B: | 0,4 bis 0,8 Mol, |
| insbesondere | 0,5 bis 0,7 Mol, |
| Alkohole C: | 0,2 bis 0,8 Mol, |
| insbesondere | 0,3 bis 0,7 Mol, |
| Alkohole D: | 0,0 bis 0,6 Mol, |
| insbesondere | 0,3 bis 0,5 Mol, |
| Polyole E: | 0 bis 0,2 Mol, |
| insbesondere | 0,01 bis 0,1 Mol. |

Die Herstellung der Polyester kann nach bekannten Methoden, z.B. durch Schmelz- oder Azeotropveresterung der Alkohole und Säuren oder deren veresterungsfähigen Derivate, z.B. ihrer Anhydride, erfolgen (vgl. Methoden der organischen Chemie, Houben-Weyl, 4. Auflage, Band 14/2, Georg Thieme Verlag, Stuttgart, 1961). Bevorzugt ist die Schmelzkondensation unter Vakuum bei Temperaturen von 140 bis 200 °C, vorzugsweise von 150 bis 180 °C.

Die Polyester können zum Vermeiden vor unerwünschter, vorzeitiger Polymerisation bereits während ihrer Herstellung mit Polymerisationsinhibitoren und/oder Antioxidantien versetzt werden. Geeignete Stabilisatoren sind in "Methoden der organischen Chemie", Houben-Weyl, 4. Auflage, Band 14/1, S. 433, Georg-Thieme-Verlag, Stuttgart, 1961, beschrieben.

Dabei handelt es sich um die üblichen zur Verhinderung einer thermischen Polymerisation verwendeten Verbindungen, z.B. Phenole und Phenolderivate, vorzugsweise sterisch gehinderte Phenole, wie das 2,6-Ditert.-butylphenol, Amine, Nitrosamine, Chinone, Hydrochinonmonoalkylether, Phenothiazine oder Phosphorigsäureester. Sie werden im allgemeinen in Mengen von 0,001 bis 3,0 Gew.-%, vorzugsweise in Mengen von 0,005 bis 0,5 Gew.-%, eingesetzt. Sehr gut eignet sich Toluhydrochinon in einer Konzentration von 0,01 bis 0,05 Gew.-%.

Die Polykondensation wird bei einer Säurezahl des Polyesters von 1 bis 50, vorzugsweise von 10 bis 30 mg/KOH pro Gramm Polyester beendet.

Die erhaltenen Produkte sind ohne Zusatz von Emulgatoren oder anderen Hilfsstoffen in Wasser emulgierbar und zeichnen sich nach der Härtung durch gute Lackeigenschaften aus. Falls erwünscht, können die Bindemittel mit Ammoniak neutralisiert werden und ergeben dann wasserklare Flüssigkeiten. Im Vergleich zu wasserlöslichen Polyestern, die dem Stand der Technik entsprechen, härten die erfindungsgemäßen Polyesterlacke schneller aus und besitzen höhere Oberflächenhärten (gemessen als Pendelhärte).

Besonders hochwertige Lacküberzüge lassen sich durch Umsetzung der erfindungsgemäßen Polyester mit Polyisocyanaten erzielen. Die erhaltenen Polyesterurethane wurden anschließend in wäßrige Emulsionen überführt. Merkliche Eigenschaftsveränderungen, wie z.B. Verbesserung der Haftfestigkeit, sind bereits ab 0,1 Gew.-% Isocyanatzugabe zu beobachten.

Darüber hinaus können die beschriebenen Lackbindemittel zur Erzielung besonderer technischer Effekte mit Füllstoffen, Pigmenten, Farbstoffen, Thixotropiemitteln, Glättmitteln, Mattierungsmitteln und Verlaufmitteln usw. in den üblichen Mengen versetzt werden.

Die Lackbindemittel lassen sich nicht nur mit Wasser verdünnen, sie können auch, falls erwünscht, in organischen Lösungsmitteln gelöst werden. Weiterhin sind die erfindungsgemäßen Polyester mit anderen UV-Bindemitteln, wie z.B. Polyesteracrylaten, Polyurethanacrylaten, Epoxyacrylaten, Reaktivverdünnern usw. verträglich. Solche Mischungen können mit Wasser - evtl. durch Zugabe von Alkalien - ebenfalls emulgiert werden. Geeignete Applikationsformen sind Spritzen, Walzen, Rakeln, Gießen, Streichen und Tauchen.

Die erfindungsgemäßen Bindemittel können nach Verdunstung des Wassers polymerisiert werden, wobei man Lackschichten mit günstigen Oberflächeneigenschaften, vorzugsweise auf Holz, aber auch auf Kunststoffen und Metallen, erhält, Die Polymerisation kann thermisch und/oder durch Zusatz von Polymerisationsinitiatoren (z.B. Radikalbildnern) erfolgen, aber auch durch energiereiche Strahlung (UV-, Elektronen-, Röntgen- oder Gamma-Strahlen, wobei Photoinitiatoren zugesetzt werden können), besonders bevorzugt ist die UV-Härtung. Als Photoinitiatoren sind die für die Strahlungshärtung bekannten Verbindungen geeignet, z.B. aromatische Ketonverbindungen, Benzophenone, Alkylbenzophenone, Michlers Keton, Antron und halogenierte Benzophenone. Weiter geeignet sind 2,4,6-Trimethylbenzoyl-diphenylphosphinoxid, Phenylglyoxylsäureester, Anthrachinon und seine zahlreichen Derivate, besonders Benzoin und seine Derivate, ferner Benzilketale und Hydroxyalkylphenone. Beispiele für geeignete Initiatoren sind in den Deutschen Offenlegungsschriften 1 769 168, 1 769 853, 1 769 854, 1 807 297, 1 807 301, 1 919 678, sowie der DE-AS 1 694 143 beschrieben. Gemische dieser Verbindungen können ebenfalls eingesetzt werden.

Die Härtung kann auch mit polymerisationsauslösenden Radikalbildnern erfolgen. Bevorzugt werden wasserlösliche Peroxide, wie Wasserstoffperoxid und Acetylacetonperoxid, ferner Methylethylketonhydroperoxid, Cyclohexanonperoxid oder die wäßrigen Emulsionen der nichtwasserlöslichen Initiatoren.

Diese Radikalbildner können in bekannter Weise mit Beschleunigern, wie z.B. den Schwermetallsalzen von Carbonsäuren, den Chelaten dieser Metalle, wie den Acetaten, Naphthenaten oder Acetylacetonaten von Kobalt, Mangan oder Vanadium, kombiniert werden. Auch die Beschleuniger können entweder, falls sie wasserlöslich sind, in Form ihrer wäßrigen Lösungen, ansonsten als wäßrige Emulsion zugesetzt werden.

Herstellung der Polyester und den entsprechenden Emulsionen daraus

Die in der nachfolgenden Tabelle aufgeführten Ausgangskomponenten wurden bei 160 bis 180 °C einer Schmelzpolykondensation unter Vakuum unterworfen. Die Reaktion wurde so lange fortgeführt, bis die angegebene Säurezahl erreicht war. In allen Beispielen wurde die Reaktion in Anwesenheit von 0,05 Gew.-% Toluhydrochinon durchgeführt.

Zur Herstellung der Dispersion wurde Wasser mittels eines Dissolvers in das Bindemittel eingerührt. Der Festkörpergehalt wurde auf 50 % eingestellt.

Prüfung der Lackbindemittel

Nach Zusatz von 1,5 Gew.-% 2-Hydroxy-2-methyl-1-phenylpropan-1-on zu den Emulsionen wurden die Proben auf Glasplatten in einer Schichtdicke von 90 µ aufgerakelt, getrocknet und mit UV-Licht bestrahlt (80 W/cm). Die Pendelhärten wurden anschließend nach König (DIN 53 157) bestimmt (siehe Tabelle 1).

In gleicher Weise wurden die Bindemittel auf Holzplatten aufgetragen, jedoch in einer Schichtdicke von 120 µ. Nach der Trocknung und Härtung wurde die Qualität der erfindungsgemäßen Lacke beurteilt. Die Filme zeichnen sich durch sehr guten Verlauf und geringes Eindringen in Holz aus. Sie sind transparent, elastisch und sehr kratzfest. Die Oberflächen sind kraterfrei.

Vergleichsbeispiel

Als Vergleichsbeispiel wurde ein Polyester hergestellt, der dem Beispiel 4 der DE-OS 3 441 154 entspricht. Im Gegensatz zu dem erfindungsgemäßen Polyester wird hier kein tri- oder tetrafunktioneller Alkohol eingesetzt. Das erhaltene Produkt dringt stark in den Holzuntergrund ein und besitzt nur eine geringe Pendelhärte (siehe Tabelle 1).

Tabelle 1

| Zusammensetzung (Mol) | Beispiele | | | | | Vergleichs- beispiel |
|---|---|---|---|---|---|---|
| | 1 | 2 | 3 | 4 | 5 | |
| Polyethylenglykol 1500 | 0,03 | 0,03 | 0,03 | 0,03 | 0,03 | 0,04 |
| Propan-1,2-diol | 0,27 | 0,41 | 0,55 | 0,47 | 0,55 | 0,53 |
| Benzylalkohol | 0,40 | 0,40 | 0,40 | 0,40 | 0,40 | 0,40 |
| Trimethylolpropan | - | - | 0,04 | 0,10 | - | - |
| Pentaerythrit | - | - | - | - | 0,04 | - |
| Glycerin | 0,18 | 0,10 | - | - | - | - |
| Trimethylolpropan- diallylether | 0,60 | 0,60 | 0,60 | 0,60 | 0,60 | 0,60 |
| Maleinsäureanhydrid | 1,00 | 1,00 | 1,00 | 1,00 | 1,00 | 1,00 |
| Säurezahl (mg KOH/g) | 23 | 21 | 19 | 20 | 21 | 21 |
| Pendelhärte nach DIN 53 157 90 µ auf Glas (s) | 101 | 98 | 88 | 97 | 95 | 57 |
| Verlauf Verhalten auf Holz | sehr gut kraterfreie Lackfilme, geringes Eindringen in den Untergrund | sehr gut | sehr gut | sehr gut | sehr gut | befriedigend starkes Eindringen in den Holz- untergrund |

Patentansprüche

1. Selbstemulgierbare, polymerisierbare, verzweigte Polyester auf Basis einer α,β-ungesättigten Polycarbonsäure A oder deren Anhydride, einer mindestens eine Allylgruppe enthaltenden Hydroxylverbindung B und eines oder mehrerer mehrwertiger Alkohole C und gegebenenfalls einwertiger Alkohole D, dadurch gekennzeichnet, daß der mehrwertige Alkohol C bevorzugt ein Polyalkylenglykol mit einer Molmasse von 400 bis 2000 ist und der Polyester cokondensierte Einheiten wenigstens eines Triols E oder 4- bis 6-wertigen Polyols E enthält und diese als Verzweigungsstellen aufzufassen sind.

2. Polyester nach Anspruch 1, dadurch gekennzeichnet, daß die Dicarbonsäure A, Maleinsäure oder Fumarsäure ist.

3. Polyester nach den vorhergehenden Ansprüchen, dadurch gekennzeichnet, daß die Hydroxyallylverbindung B Trimethylolpropanmonoallylether oder Trimethylolpropandiallylether ist.

4. Polyester nach den vorhergehenden Ansprüchen, dadurch gekennzeichnet, daß das Polyalkylenglykol C mit Propylenoxid oder Ethylenoxid alkoxyliert ist.

5. Polyester nach den vorhergehenden Ansprüchen, dadurch gekenzeichnet, daß die Tri- oder höherwertigen Polyole E Glycerin, Trimethylolpropan oder Pentaerythrit sind.

6. Polyester nach den vorhergehenden Ansprüchen, dadurch gekennzeichnet, daß der einwertige Alkohol D einen Siedepunkt > 190° C hat.

7. Polyester nach vorhergehenden Ansprüchen, dadurch gekennzeichnet, daß der einwertige Alkohol D Benzylalkohol, $\beta$-Phenylethanol, 1-Decanol oder Diethylenglykolmonobutylether ist.

8. Polyester nach den vorhergehenden Ansprüchen, dadurch gekennzeichnet, daß er aus

| | |
|---|---|
| Polycarbonsäure A | 0,8 bis 1,2 Mol |
| Hydroxyallylverbindung B | 0,4 bis 0,8 Mol |
| Alkohol C | 0,2 bis 0,8 Mol |
| Alkohol D | 0,0 bis 0,6 Mol |
| Polyol E | 0 bis 0,2 Mol |

besteht.

9. Polyester nach den vorhergehenden Ansprüchen, dadurch gekennzeichnet, daß er zur Oberflächenbeschichtung verwendet wird.

10. Verwendung gemäß Anspruch 9 zur Herstellung von UV-härtbaren Wasserlacken.

**Europäisches Patentamt**

# EUROPÄISCHER RECHERCHENBERICHT

Nummer der Anmeldung

EP 93 10 9000

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-2 884 394 (R. P. SILVER) <br><br> * das ganze Dokument * <br> --- | 1-3,5,8, 9 | C08G63/676 <br> C09D167/06 |
| X <br> D | EP-A-0 451 588 (WOLFF WALSRODE AG) <br> & DE-A-4 011 353 <br> * das ganze Dokument * <br> --- | 1-4,8-10 | |
| D,X | DE-A-3 218 200 (BAYER AG) <br> * Seite 9, Zeile 25 - Seite 10, Zeile 6; Ansprüche 1-4 * <br> --- | 1-3,5-10 | |
| A <br><br> D | EP-A-0 182 147 (BAYER AG) <br> * Ansprüche 1-8 * <br> & DE-A-3 441 154 <br><br> ----- | 1-10 | |

|  |
|---|
| **RECHERCHIERTE SACHGEBIETE (Int. Cl.5)** |
| C08G <br> C09D |

Der vorliegende Recherchenbericht wurde für alle Patentansprüche erstellt

| Recherchenort | Abschlußdatum der Recherche | Prüfer |
|---|---|---|
| DEN HAAG | 03 SEPTEMBER 1993 | DECOCKER L. |